# EUROPÄISCHE PATENTSCHRIFT

(11) **EP 3 503 774 B1**
(45) Veröffentlichungstag und Bekanntmachung des Hinweises auf die Patenterteilung: **08.07.2020**
(21) Anmeldenummer: 17748479.7
(22) Anmeldetag: 03.08.2017
(51) Int. Cl.: A47J 43/044

(54) **KÜCHENGERÄT**
KITCHEN APPLIANCE
APPAREIL DE CUISINE

(30) Priorität: 26.08.2016 DE 102016216099
(43) Veröffentlichungstag der Anmeldung: 03.07.2019
(73) Patentinhaber: BSH Hausgeräte GmbH, 81739 München (DE)
(72) Erfinder: BRECKO, Ales, 3000 Celje (SI); CATER, Matej, 3301 Petrovce (SI); HOLCINGER, Tadej, 3220 Store (SI)
(86) Internationale Anmeldenummer: PCT/EP2017/069625
(87) Internationale Veröffentlichungsnummer: WO 2018/036778

(56) Entgegenhaltungen:
- WO-A1-2015/086968
- DE-A1-102013 216 087

## Beschreibung

Die vorliegende Erfindung betrifft ein Küchengerät mit einem Schwenkarm, der mit einem Sockelteil schwenkbar verbunden ist, und mit einer Sicherungseinrichtung, die dafür eingerichtet ist, ein Schwenken des Schwenkarms relativ zum Sockelteil zu unterbinden.

### Stand der Technik

Die Druckschrift WO 2015/086968 A1 offenbart ein Küchengerät mit einem um eine Schwenkachse schwenkbaren Schwenkarm 3 und mit einer Sicherungseinrichtung für den Schwenkarm 3 in der Arbeitsposition, wobei die Sicherungseinrichtung ein auf der Schwenkachse drehbar gelagertes Aktivierungselement 70+74 umfasst. Beispielsweise aus der deutschen Patentanmeldung DE 10 2013 216 087 A1 ist ein Küchengerät bekannt, das einen Schwenkarm und eine Sicherungseinrichtung für den Schwenkarm aufweist. Derartige Küchengeräte nutzen den Schwenkarm zum lösbaren Befestigen und Anorden von Werkzeugen innerhalb einer Rührschüssel. Zum Wechsel von Werkzeugen muss der Schwenkarm in der Regel nach hinten geklappt werden. Hierzu muss eine Sicherungseinrichtung betätigt werden. Diese soll einerseits ein leichtes Entriegeln gestatten und andererseits beim Betrieb des Küchengeräts eine möglichst sichere Verriegelung garantieren. Stand der Technik ist, dass ein Sperrelement der Sicherungseinrichtung entlang der Schwenkachse translatierbar angeordnet ist. Das translatierbare Sperrelement kann zu einer Schwenkblockade für den Schwenkarm führen.

Ist ein Sperrelement als Bestandteil der Sicherungseinrichtung entlang der Schwenkachse translatierbar, so kann dies den Vorteil haben, dass ein solches Sperrelement sehr einfach bereitgestellt werden kann. So kann das Sperrelement zwischen einer Schwenkstellung und einer Sperrstellung translatiert werden. Als Schwenkstellung im Sinne der Erfindung ist die Stellung des Sperrelements definiert, in dem das Verschwenken des Schwenkarms des Küchengeräts gegenüber dem Sockelteil durch das Sperrelement nicht unterbunden wird. In dieser Stellung ist das Sperrelement also bezogen auf seine Sperrfunktion inaktiv. Als Sperrstellung des Sperrelements ist im Sinne der Erfindung jene Stellung des Sperrelements zu verstehen, in der das Schwenken des Schwenkarms des Küchengeräts durch das Sperrelement unterbunden wird. In der Sperrstellung ist das Schwenken des Schwenkarms relativ zum Sockelteil also unterbunden. Befindet sich das Sperrelement in der Sperrstellung, so ist das Sperrelement aktiv.

### Der Erfindung zu Grunde liegende Aufgabe

Der Erfindung liegt die Aufgabe zugrunde, ein Küchengerät zu schaffen, das gegenüber dem Stand der Technik verbessert ist. Insbesondere soll ein Küchengerät geschaffen werden, bei dem auf ästhetisch ansprechende Weise eine Sicherungseinrichtung, die dafür eingerichtet ist, ein Schwenken des Schwenkarms relativ zum Sockelteil zu unterbinden, bereitgestellt werden. Insbesondere sollen vermieden werden, dass die äußere Anmutung des Küchengeräts durch die Sicherungseinrichtung wesentlich gestört wird, etwa durch von außen sichtbare Komponenten der Sicherungseinrichtung. Die Sicherungseinrichtung soll insbesondere möglichst preiswert und einfach herzustellen sein, ohne dass dafür wesentliche Änderungen an der Gestaltung des Sockelteils oder am Schwenkarm des Küchengeräts vorgenommen werden müssen.

### Erfindungsgemäße Lösung

Zur Lösung der Aufgabe lehrt die Erfindung ein Küchengerät mit den Merkmalen des Patentanspruchs 1.

Ein Küchengerät im Sinne der Erfindung ist ein elektrisch oder mechanisch antreibbares Standküchengerät, insbesondere ein Universalküchengerät. Das Küchengerät ist zur Bearbeitung von Nahrungsmitteln vorgesehen und umfasst zu diesem Zweck Bearbeitungswerkzeuge für Nahrungsmittel, beispielsweise zum Mixen, Kneten, Häckseln, Schneiden, Pürieren oder Entsaften, und Kupplungen zur Aufnahme solcher Bearbeitungswerkzeuge.

Das Sockelteil (Grundkörper des Küchengeräts) ist im Sinne dieser Erfindung das Element des Küchengeräts, das im Betriebszustand des Küchengeräts auf einer Unterlage, wie beispielsweise einer Küchenarbeitsplatte, abgestellt ist, also mit ihr über Standfüße, beispielsweise an einer Bodenwand, oder auch direkt über eine Bodenwand in Kontakt steht.

Der Schwenkarm ist im Sinne dieser Erfindung das Element des Küchengeräts, an dem Bearbeitungswerkzeuge angebracht sind oder mittels Kupplungen angebracht werden können. Ein Schwenkarm kann ein oder mehrere Bearbeitungswerkzeuge und/oder Kupplungen aufweisen. Der Schwenkarm ist gegenüber dem Sockelteil verschwenkbar am Sockelteil angeordnet.

Die Schwenkachse ist im Sinne der vorliegenden Erfindung die Rotationsachse, mittels derer der Schwenkarm mit dem Sockelteil verbunden ist, und um die der Schwenkarm gegenüber dem Sockelteil verschwenkt werden kann.

Unterbinden bedeutet im Sinne der Erfindung, dass das Schwenken des Schwenkarmes durch die Sicherungseinrichtung verhindert werden soll, sofern dies vom Benutzer gewünscht ist. Dies kann beispielsweise dann der Fall sein, wenn der Benutzer den Schwenkarm in eine Betriebsposition gebracht hat und ein selbstständiges Verschwenken aus der Betriebsposition heraus verhindern möchte.

Die Sicherungseinrichtung umfasst ein Aktivierungselement, das mit der Schwenkachse verbunden ist. Das Aktivierungselement kann eine Bohrung aufweisen, um auf der Schwenkachse drehbar gelagert zu werden. Dies hat den Vorteil, dass für die Schwenkbewegung des Schwenkarms und eine Schwenkbewegung von relevanten Teilen der Sicherungseinrichtung nur eine einzige Schwenkachse ausgebildet werden muss. Dies führt zu einer Einsparung oder Reduzierung von Bauteilen. Die erfindungsgemäße Sicherungseinrichtung kann klein und kompakt gehalten werden.

Das erfindungsgemäße Küchengerät weist eine Sicherungseinrichtung auf, die möglichst direkt an der Schwenkachse des Schenkarms angeordnet ist. Dies hat den Vorteil, dass die Sicherungseinrichtung mit wenigen Bauteilen auskommt und einen geringen Bauraum benötigt. Insbesondere muss für eine Bewegung von Teilen der Sicherungseinrichtung keine weitere Schwenkachse ausgebildet werden, deren Verwirklichung am Gehäuse des Küchengeräts sichtbar wäre oder zumindest einen Einfluss auf die Kontur des Gehäuses des Küchengeräts hätte. Mithin kann mit der Erfindung vorteilhafterweise vermieden werden, dass die äußere Anmutung des Küchengeräts durch die Sicherungseinrichtung wesentlich gestört wird.

### Bevorzugte Ausgestaltung der Erfindung

Vorteilhafte Aus- und Weiterbildungen, welche einzeln oder in Kombination miteinander eingesetzt werden können, sind Gegenstand der abhängigen Patentansprüche.

Bei einer bevorzugten weiteren Ausführungsform der Erfindung ist das Aktivierungselement mit einem Hebel oder Handgriff verbunden. Dies ermöglicht eine leichte Bedienung der Sicherungseinrichtung und gleichzeitig eine Einbausicherung des Aktivierungselements. Der Hebel kann auf die Schwenkachse aufgesteckt werden und verhindern, dass das Aktivierungselement von der Schwenkachse herunter rutscht oder in Längsrichtung der Schwenkachse verschoben wird, wodurch das Unterbinden der Schwenkbewegung beeinträchtigt werden kann. Der Betätigungshebel wirkt gleichzeitig als Verschlusselement.

Ein weiteres zentrales Bauteil der Sicherungseinrichtung stellt das Verbindungselement dar, welches das Aktivierungselement mit dem Sockelteil verbindet. Eine Leiste ist einerseits mit dem Verbindungselement und andererseits mit dem Schwenkarm verbunden. Es wird eine Hebel-Gelenk- oder Kniegelenk-Verbindung ausgebildet, die ein sicheres Verschwenken des Schwenkarms erlaubt.

Zur definierten Bewegung des Schwenkarms kann das Verbindungselement bei einer besonders bevorzugten Ausführungsform eine Führungsaussparung aufweisen.

Zur Verbindung des Aktivierungselements mit einem Verbindungselement der Sicherungseinrichtung weist das Aktivierungselement vorteilhafter Weise zwei parallel zueinander ausgerichtete Absätze oder Zungen zur Aufnahme eines Endes des Verbindungselements auf. Dadurch kann eine stabile gelenkige Verbindung hergestellt werden.

Zur Blockierung oder aber Arretierung der Sicherungseinrichtung kann ein Federelement vorgesehen sein. Das Federelement kann bevorzugt durch eine Schraubenfeder ausgebildet sein. Die mechanische Federkraft wird dazu benutzt, die Sicherungseinrichtung in der Verrieglungsstellung oder Betriebsstellung des Küchengeräts zu halten.

Besonders vorzugsweise ist die Sicherungseinrichtung in die Sperrstellung vorgespannt. Allerdings verhindert besonders vorzugsweise ein Halteelement seitens der Sicherungseinrichtung, dass das in die Sperrstellung vorgespannte Bauteil der Sicherungseinrichtung die Sperrstellung auch einnimmt, solange der Benutzer die Sicherungseinrichtung nicht betätigt. Durch die Betätigung löst sich vorzugsweise das Aktivierungselement, besonders vorzugsweise ruckartig, aus der Schwenkstellung und wird durch die Vorspannung von dem elastischen Element in die Sperrstellung entlang der Schwenkachse in Richtung des Schwenkarms verschwenkt.

Vorzugsweise ist das elastische Element eine Schraubenfeder. So kann eine sehr platzsparende und einfache Lagerung für das elastische Element bereitgestellt werden. Es muss keine Lagerung am Sockelteil oder am Schwenkarm des Küchengeräts erfolgen, so dass die Herstellung eines entsprechend ausgestatteten Küchengeräts auf einfache Weise möglich ist.

In einer bevorzugten Ausführungsform ist die Schwenkachse in einem Kugellager gegenüber dem Sockelteil drehbar gelagert. Statt einem Kugellager kommt in anderen Ausführungsformen ein Gleitlager zum Einsatz. Ein Gleitlager kann kostengünstiger sein. Aus Kostengründen wird die Schwenkachse einfach durch entsprechende Borhungen im Sockelteil und im Schenkarm gesteckt. Die Schwenkachse kann rotationsgesichert oder auch generell fest, ohne Rotationsmöglichkeit, angeordnet sein.

Vorzugsweise ist an der Schwenkachse eine Hubeinrichtung angeordnet, um eine Schwenkbewegung des Schwenkarms zu unterstützen. Dies hat den Vorteil, dass der Schwenkarm leicht zurückgeklappt werden kann beziehungsweise teilweise selbsttätig nach hinten klappt, wenn die Sicherungseinrichtung betätigt wird.

### Kurzbeschreibung der Zeichnungen

Die Erfindung wird im Folgenden anhand schematischer Zeichnungen an einem Ausführungsbeispiel mit weiteren Einzelheiten näher erläutert. Die Erfindung ist jedoch nicht auf das Ausführungsbeispiel beschränkt.

Es zeigen schematisch:
- Fig. 1: eine perspektivische Darstellung eines erfindungsgemäßen Küchengerätes;
- Fig. 2: eine Explosionsdarstellung der Sicherungseinrichtung für den Schwenkarm des Küchengeräts nach Fig. 1;
- Fig. 3: einen Teil eines Längsschnitt des Küchengeräts nach Fig. 1, bei dem sich die Sicherungseinrichtung in einer Sperrposition befindet.

### Detaillierte Beschreibung einer Ausführung der Erfindung

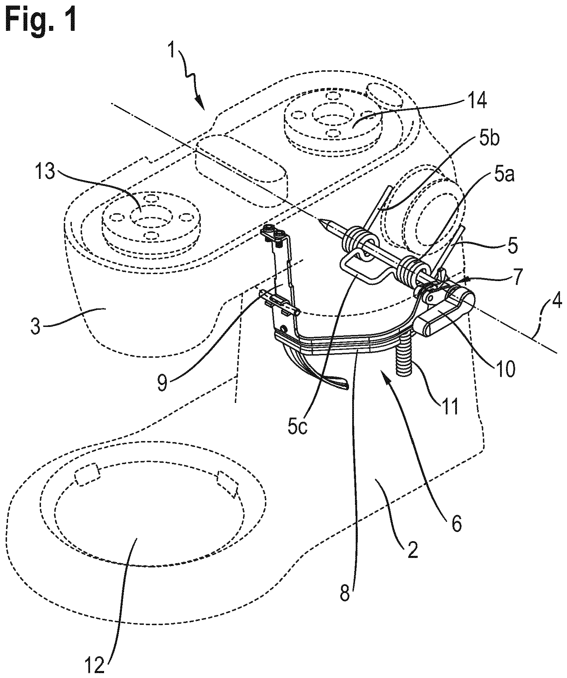

Die Fig. 1 bis 3 zeigen ein erfindungsgemäßes Küchengerät 1 oder Elemente, die für ein erfindungsgemäßes Küchengerät 1 von besonderer Bedeutung sein können.

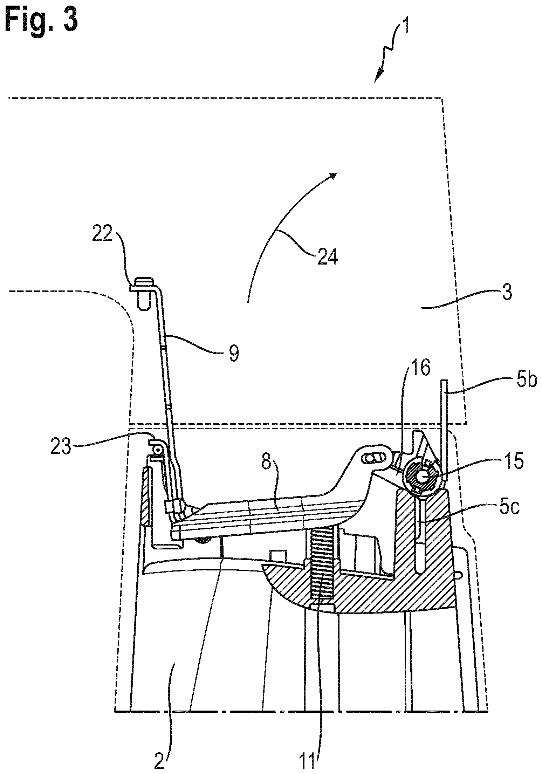

Das Küchengerät 1 umfasst einen Sockelteil 2 und einen Schwenkarm 3. Der Schwenkarm 3 ist über eine Schwenkachse 4 schwenkbar am Sockelteil 2 angelenkt. An der Schwenkachse 4 ist eine Hubeinrichtung 5 angeordnet, die dafür eingerichtet ist, eine Schwenkbewegung des Schwenkarms 3 zu unterstützen. Die Hubeinrichtung ist durch eine Hubfeder 5 ausgebildet. Die Hubfeder 5 besitzt ein schraubenförmiges Mittelteil 5a zum Aufschieben auf die Schwenkachse 4 sowie Schenkel 5b und 5c zum Einbau in den Sockelteil 2 und in den Schwenkarm 3 (siehe Fig. 3).

Das Küchengerät 1 weist eine Sicherungseinrichtung 6 auf, die dafür eingerichtet ist, das Schwenken des Schwenkarms 3 relativ zum Sockelteil 2 zu unterbinden, wie im Detail in Fig. 3 zu erkennen ist. Als Bestandteile dieser Sicherungseinrichtung 6 sind im wesentlichen ein Aktivierungselement 7, ein Verbindungselement 8, eine Sicherungsleiste 9 und ein Betätigungshebel 10 vorgesehen. Das Aktivierungselement 7 ist auf der Schwenkachse 4 des Schwenkarms 3 verschwenkbar angeordnet. Dabei ist das Verbindungselement 8 durch ein elastisches Element 11 in eine Sperrstellung, in der das Schwenken des Schwenkarms 3 unterbunden ist, vorgespannt. Das Verbindungselement 8 nimmt diese allerdings erst ein, sofern der Benutzer das Unterbinden der Schwenkbewegung des Schwenkarms 3 wünscht. Bis dahin befindet sich das Verbindungselement 8 in einer Schwenkstellung, in der das kraftunterstützte Verschwenken des Schwenkarms 3 möglich ist.

Um die Sicherungseinrichtung 6 betätigen zu können, ist seitens des Sockelteils 2 des Küchengeräts 1 ein Betätigungshebel 10 vorgesehen. Das elastische Element 11 ist so eingerichtet, dass es unter mechanischer Spannung steht, solange der Betätigungshebel 10 betätigt wird. Sobald ein Benutzer den Betätigungshebel 10 in Richtung des elastischen Elements 11 dreht, gibt die Sicherungseinrichtung 6 den Schwenkarm 3 frei.

Die in Fig. 1 dargestellte Küchengerät 1 besitzt eine Kupplungsstelle 12 für eine in der Fig.1 nicht gezeigte Rührschüssel. Ein Gehäuse 5 des Küchengeräts 1 ist durch gepunktete Linien lediglich angedeutet und kann beliebige Konturen aufweisen. Zum Betrieb des Küchengeräts 1 sind weitere Kupplungsstellen 13 und 14 für entsprechendes Zubehör wie Mixbecher usw. vorgesehen.

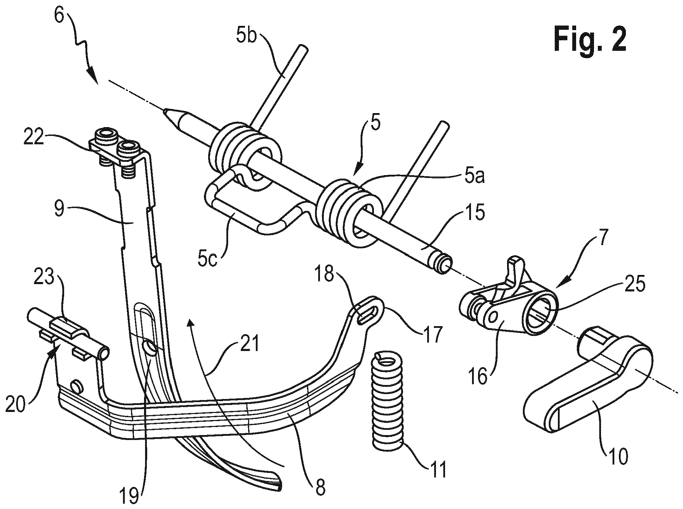

Aus der Fig. 2 ist der Aufbau des Sicherungseinrichtung 6 leicht ersichtlich. Ein Stab 15 definiert die Schwenkachse 4 des nicht gezeigten Schwenkarms 3 (siehe beispielsweise Fig. 3). Zur Lagerung des Stabes 15 und zur Ausbildung als Schwenkachse 4 weist das Gehäuse gegenüber liegende Bohrungen oder Lagerpunkte auf. Zur Verbindung des Verbindungselements 8 mit dem Stab 15 ist das Aktivierungselement 7 auf den Stab 15 aufsteckbar. Das Aktivierungselement 7 weist zwei gegenüberliegende Zungen 16 auf, zwischen denen ein Ende 17 des Verbindungselements 8 aufgenommen und gehaltert werden kann. Damit die Halterung nicht starr ausgebildet ist, ist ein Langloch 18 an dem dem Stab 15 zugewandten Ende 17 des Verbindungselements 8 ausgebildet, so dass hier ein geringes Spiel und somit eine gelenkige Verbindung existiert. Anderenends weist das Verbindungselement 8 Mittel 20 zur lösbaren Befestigung (Verrastung) an dem Sockelteil 2 des Küchengeräts 1 auf. Ein Stift 20' ist in eine Nut des Sockelteils 2 eingesetzt.

Die Sicherungsleiste 9 ist mit dem Verbindungselement 8 derart verbunden, dass die Sicherungsleiste 9 verschiebbar ist, wenn die Sicherungseinrichtung 6 betätigt wird und damit die Schwenkbewegung zulässt. An dem Verbindungselement 8 ist eine Führungsaussparung 19 ausgebildet. Die Sicherungsleiste 9 und das Verbindungselement 8 sind über einen Stift oder dergleichen im Bereich der Führungsaussparung 19 verbunden. Bei Freigabe der Sicherungseinrichtung 6 kann dadurch die Sicherungsleiste 9 innerhalb des Bereichs der Führungsaussparung 19 verschoben werden. Die Krümmung der Führungsaussparung 19 definiert somit die Schwenkbewegung des Schwenkarms 3 in Pfeilrichtung 21. Das Ende 22 der Leiste 9 ist fest mit dem Schwenkarm 3 zu verbinden, beispielsweise durch eine Schraubverbindung.

Wie in Fig. 3 (verriegelte Position) dargestellt, kann der Schwenkarm 3 um die Schwenkachse 4 (Stab 15) verschwenkt werden. Die Hubfeder 5 ist zwischen dem Schwenkarm 3 und der Basis 2 fest eingebaut. Federschenkel 5b, 5c der gespreizten vorgespannten Hubfeder 5 werden in Ausnehmungen des Sockelteils 2 eingesteckt. Die Hubfeder 5 gewährleistet oder sorgt durch die Wahl der geeigneten Federkraft für einen einstellbaren Hub des Schwenkarms 3 bei Betätigung des Hebels 10.

Beim Einbau der Sicherungseinrichtung 6 wird zunächst das Aktivierungselement 7 auf die Schwenkachse 4 (siehe Fig. 1) aufgeschoben. Anschließend werden das Verbindungselement 8 und die Schraubenfeder 11 eingebaut, welche für die eigentliche Verriegelung zuständig ist. Die Schraubenfeder 11 wird in einen entsprechenden Aufnahmeraum in das Sockelteil 2 eingesetzt und ist einenends fest mit dem Sockelteil 2 verbunden. Zuletzt werden der Schwenkarm 3 und das Sockelteil 2 über die Schwenkachse 4 (Stab 15) miteinander verbunden. Der Stab 15 wird durch zwei entsprechende Bohrungen im Gehäuse des Küchengeräts durchgeschoben sowie durch die Bohrung des Aktivierungselements 7.

Zur Verhinderung, dass die Schwenkachse 10 herausfällt, wird der Hebel 10 in das Aktivierungsstück 7 (Bohrung 25) eingesetzt. Der Mechanismus der Verriegelung beziehungsweise der Entriegelung beruht auf der Drehung beziehungsweise der Übertragung der Drehung vom Betätigungshebel10 über das auf der Schwenkachse 4 gelagerte Aktivierungselement 7 auf das Verbindungselement 8. Bei Drehung des Hebels 10 in Richtung des Verbindungselements 8 wird das Verbindungselements 8 im vorderen Bereich nach unten gedrückt auf die Schraubenfeder 11 und das andere Ende 23 des Verbindungselements 8 wird freigegeben und kann nach oben bewegt werden. Die Sicherungsleiste 9 kann ebenfalls nach oben schieben. Dadurch kann der Schwenkarm 3 in Pfeilrichtung 24 nach hinten klappen.

Vorteilhafterweise ist bei der oben beschriebenen Ausführung der Erfindung keine weitere Schwenkachse für eine Bewegung von Teilen der Sicherungseinrichtung, deren Verwirklichung am Gehäuse des Küchengeräts sichtbar wäre oder einen Einfluss auf die Kontur des Gehäuses des Küchengeräts hätte, vorgesehen. Dadurch kann vorteilhafterweise vermieden werden, dass die äußere Anmutung des Küchengeräts durch die Sicherungseinrichtung wesentlich gestört wird.

### Bezugszeichenliste

- 1: Küchengerät
- 2: Sockelteil
- 3: Schwenkarm
- 4: Schwenkachse
- 5: Hubfeder
- 5a: Mittelteil
- 5b: Federschenkel
- 5c: Federbügel
- 6: Sicherungseinrichtung
- 7: Aktivierungselement
- 8: Verbindungselement
- 9: Sicherungsleiste
- 10: Betätigungshebel
- 11: Elastisches Element
- 12: Kupplungsstelle
- 13: Kupplungsstelle
- 14: Kupplungsstelle
- 15: Stab
- 16: Zunge
- 17: Ende
- 18: Langloch
- 19: Führungsaussparung
- 20: Befestigungsmittel
- 21: Schwenkrichtung
- 22: Ende
- 23: Ende
- 24: Hubrichtung
- 25: Bohrung

## Patentansprüche

1. Küchengerät (1) mit einem um eine Schwenkachse (4) schwenkbaren Schwenkarm (3) und mit einer Sicherungseinrichtung (6) für den Schwenkarm (4) in der Arbeitsposition, wobei die Sicherungseinrichtung (6) ein auf der Schwenkachse (4) drehbar gelagertes Aktivierungselement (7) umfasst,
**dadurch gekennzeichnet, dass**
die Sicherungseinrichtung (6) ein Verbindungselement (8) und eine Leiste (9) aufweist, die relativ zueinander verschiebbar sind.

2. Küchengerät nach Anspruch 1, **dadurch gekennzeichnet, dass** ein Betätigungshebel (10) für die Sicherungseinrichtung (6) vorgesehen ist

3. Küchengerät nach Anspruch 2, **dadurch gekennzeichnet, dass** der Betätigungshebel (10) mit dem Aktivierungselement (7) fest verbunden ist.

4. Küchengerät nach einem der vorhergehenden Ansprüche, **dadurch gekennzeichnet, dass** die Sicherungseinrichtung (6) durch ein elastisches Element (11) vorgespannt ist.

5. Küchengerät nach Anspruch 4, **dadurch gekennzeichnet, dass** das elastische Element durch eine Schraubenfeder (11) ausgebildet ist.

6. Küchengerät nach einem der vorhergehenden Ansprüche, **dadurch gekennzeichnet, dass** das Verbindungselement (8) einenends mit dem Aktivierungselement (7) und anderenends mit dem Sockelteil (2) verbunden ist.

7. Küchengerät nach einem der vorhergehenden Ansprüche, **dadurch gekennzeichnet, dass** eine Leiste vorgesehen ist, die einenends mit dem Verbindungselement (8) und anderenends mit dem Sockelteil (2) verbunden ist.

8. Küchengerät nach einem der vorhergehenden Ansprüche, **dadurch gekennzeichnet, dass** die Leiste (9) und das Verbindungselement (8) verschiebbar miteinander verbunden sind.

9. Küchengerät nach einem der vorhergehenden Ansprüche, **dadurch gekennzeichnet, dass** das Aktivierungselement (7) zwei gegenüberliegende Zungen (16) zur Halterung des einen Endes des Verbindungselements (8) aufweist.

10. Küchengerät nach einer vorhergehenden Ansprüche, **dadurch gekennzeichnet, dass** das Verbindungselement (8) anderenends mit dem Schwenkarm (4) fest verbunden ist.

11. Küchengerät nach einem der vorhergehenden Ansprüche, **dadurch gekennzeichnet, dass** die Leiste (9) eine Führungsaussparung (19) besitzt.

12. Küchengerät nach Anspruch 11, **dadurch gekennzeichnet, dass** die Führungsaussparung (19) in Längsrichtung gekrümmt ausgebildet ist.

13. Küchengerät nach einem der vorhergehenden Ansprüche, **dadurch gekennzeichnet, dass** an der Schwenkachse (4) eine Hubeinrichtung (5) für eine Unterstützung der Schwenkbewegung des Schwenkarms ausgebildet ist.

14. Küchengerät nach einem der vorhergehenden Ansprüche, **dadurch gekennzeichnet, dass** die Schwenkachse (4) in einem Kugellager gegenüber dem Sockelteil (2) drehbar gelagert ist.

## Claims

1. Kitchen appliance (1) with a pivot arm (3) which can be pivoted about a pivot axis (4) and with a securing device (6) for the pivot arm (4) in the operating position, wherein the securing device (6) comprises an activation element (7) mounted rotatably on the pivot axis (4),
**characterised in that**
the securing device (6) has a connection element (8) and a strip (9) which can be displaced relative to one another.

2. Kitchen appliance according to claim 1, **characterised in that** an actuation lever (10) is provided for the securing device (6).

3. Kitchen appliance according to claim 2, **characterised in that** the actuation lever (10) is fixedly connected to the activation element (7).

4. Kitchen appliance according to one of the preceding claims, **characterised in that** the securing device (6) is prestressed by an elastic element (11).

5. Kitchen appliance according to claim 4, **characterised in that** the elastic element is embodied by a helical spring (11).

6. Kitchen appliance according to one of the preceding claims, **characterised in that** the connection element (8) is connected at one end to the activation element (7) and at the other end to the base part (2).

7. Kitchen appliance according to one of the preceding claims, **characterised in that** a strip is provided which is connected at one end to the connection element (8) and at the other end to the base part (2).

8. Kitchen appliance according to one of the preceding claims, **characterised in that** the strip (9) and the connection element (8) are connected to one another in a displaceable manner.

9. Kitchen appliance according to one of the preceding claims, **characterised in that** the activation element (7) has two opposing tongues (16) for holding the one end of the connection element (8).

10. Kitchen appliance according to one of the preceding claims, **characterised in that** the connection element (8) is fixedly connected at the other end to the pivot arm (4).

11. Kitchen appliance according to one of the preceding claims, **characterised in that** the strip (9) has a guide cut-out (19).

12. Kitchen appliance according to claim 11, **characterised in that** the guide cut-out (19) is embodied curved in the longitudinal direction.

13. Kitchen appliance according to one of the preceding claims, **characterised in that** a lifting device (5) for supporting the pivot movement of the pivot arm is embodied on the pivot axis (4).

14. Kitchen appliance according to one of the preceding claims, **characterised in that** the pivot axis (4) is mounted rotatably relative to the base part (2) in a spherical bearing.

## Revendications

1. Appareil de cuisine (1) comprenant un bras articulé (3) pivotant autour d'un pivot (4) et comprenant un dispositif de sécurité (6) pour le bras articulé (4) en position de travail, le dispositif de sécurité (6) comprenant un élément d'activation (7) logé à rotation sur le pivot (4),
**caractérisé en ce que**
le dispositif de sécurité (6) comporte un élément de raccord (8) et une latte (9) se déplaçant l'un par rapport à l'autre.

2. Appareil de cuisine selon la revendication 1, **caractérisé en ce qu'**un levier d'actionnement (10) est prévu pour le dispositif de sécurité (6).

3. Appareil de cuisine selon la revendication 2, **caractérisé en ce que** le levier d'actionnement (10) est raccordé inamovible à l'élément d'activation (7).

4. Appareil de cuisine selon l'une des revendications précédentes, **caractérisé en ce que** le dispositif de sécurité (6) est précontraint par un élément élastique (11).

5. Appareil de cuisine selon la revendication 4, **caractérisé en ce que** l'élément élastique est réalisé comme un ressort à boudin (11).

6. Appareil de cuisine selon l'une des revendications précédentes, **caractérisé en ce que** l'élément de raccord (8) est raccordé à une extrémité à l'élément d'activation (7) et à l'autre extrémité à la partie formant socle (2).

7. Appareil de cuisine selon l'une des revendications précédentes, **caractérisé en ce qu'**une latte est prévue, laquelle est raccordée à une extrémité à l'élément de raccord (8) et à l'autre extrémité à la partie formant socle (2).

8. Appareil de cuisine selon l'une des revendications précédentes, **caractérisé en ce que** la latte (9) et l'élément de raccord (8) sont raccordés l'un à l'autre à déplacement.

9. Appareil de cuisine selon l'une des revendications précédentes, **caractérisé en ce que** l'élément d'activation (7) comporte deux pattes (16) opposées pour la fixation de la première extrémité de l'élément de raccord (8).

10. Appareil de cuisine selon l'une des revendications précédentes, **caractérisé en ce que** l'élément de raccord (8) est raccordé inamovible à l'autre extrémité, au bras articulé (4).

11. Appareil de cuisine selon l'une des revendications précédentes, **caractérisé en ce que** la latte (9) possède un évidement de guidage (19).

12. Appareil de cuisine selon la revendication 11, **caractérisé en ce que** l'évidement de guidage (19) est réalisé recourbé dans la direction longitudinale.

13. Appareil de cuisine selon l'une des revendications précédentes, **caractérisé en ce que** sur le pivot (4) se trouve un dispositif de levage (5) pour le soutien du mouvement de pivotement du bras articulé.

14. Appareil de cuisine selon l'une des revendications précédentes, **caractérisé en ce que** le pivot (4) est logé à rotation dans un roulement à bille face à la partie formant socle (2).
